# EUROPÄISCHE PATENTSCHRIFT

(11) **EP 4 022 422 B1**
(45) Veröffentlichungstag und Bekanntmachung des Hinweises auf die Patenterteilung: **06.09.2023**
(21) Anmeldenummer: 21737379.4
(22) Anmeldetag: 24.06.2021
(51) Int. Cl.: G06F 3/01, G06F 3/04883

(54) **VERFAHREN ZUM ERZEUGEN EINER HAPTISCHEN RÜCKMELDUNG**
METHOD FOR PRODUCING A HAPTIC FEEDBACK
MÉTHODE POUR GÉNÉRER UNE RÉPONSE HAPTIQUE

(30) Priorität: 20.07.2020 DE 102020004363
(43) Veröffentlichungstag der Anmeldung: 06.07.2022
(73) Patentinhaber: Mercedes-Benz Group AG, 70372 Stuttgart (DE)
(72) Erfinder: MÖRZ, Sebastian, 71063 Sindelfingen (DE); REISINGER, Jörg, 74369 Löchgau (DE); STIPPA, Jörg, 70327 Stuttgart (DE); MÜLLER, Andreas, 71126 Gäufelden (DE); ALBERT, Manuel, Christopher, 71149 Bondorf (DE); SCHÖLLER, Fabian, 71394 Kernen (DE)
(74) Vertreter: Novagraaf Group
(86) Internationale Anmeldenummer: PCT/EP2021/067412
(87) Internationale Veröffentlichungsnummer: WO 2022/017722

(56) Entgegenhaltungen:
- US-A1- 2013 215 079
- US-A1- 2014 139 450
- US-A1- 2014 267 065

## Beschreibung

Die Erfindung betrifft ein Verfahren zum Erzeugen einer haptischen Rückmeldung auf einer durch Fingerbewegungen bedienbaren Anzeigefläche. Außerdem betrifft die Erfindung eine Vorrichtung mit einer Anzeige- und Bedienoberfläche zur Durchführung eines Verfahrens.

Eine haptische Rückmeldung über Vibrationen auf einer durch Fingerbewegungen bedienbaren Anzeigefläche, insbesondere einem Touchdisplay, zu realisieren, ist so weit aus dem Stand der Technik bekannt. So beschreibt beispielsweise die US 2014/0327839 A1 eine entsprechende Kontaktfläche, welche mit Aktuatoren zum Erzeugen von Vibrationen versehen ist. Die Aktuatoren sind hier in Form einer piezoelektrischen Schicht ausgebildet.

Aus der US 2019/0345185 A1 ist ferner eine touchbedienbare Anzeigefläche bekannt, bei welcher über Aktuatoren, hier Piezoaktuatoren, welche um die Seiten der Anzeigefläche verteilt sind, die Oberfläche in Schwingungen im Ultraschallbereich versetzt wird. Durch eine Veränderung der Frequenz ist dabei die einer Fingerbewegung entgegenstehende Reibungskraft modulierbar. In Abhängigkeit einer sensierten Position des Fingers auf der Bedienoberfläche ist also der Reibungskoeffizient zwischen dem Finger und der Oberfläche einstellbar.

Die US 2014/267065 A1 offenbart ein System mit einer touchbedienbaren Oberfläche, die in Geräten wie beispielsweise Smartphones, Computern oder Tablets Anwendung findet.

Das System bestimmt dann eine oder mehrere Eigenschaften eines mit der Bedienoberfläche in Kontakt tretenden Objektes und erzeugt als Reaktion auf die Berührung einen haptischen Effekt. Die Art des haptischen Effekts basiert zumindest auf der einen oder den mehreren Eigenschaften des mit der Bedienoberfläche in Kontakt tretenden Objekts.

Aus der US 2014/139450 A1 ist eine touchbedienbare Bedienoberfläche bekannt, bei der ein Sensor eine Benutzerinteraktion mit der Bedienoberfläche erkennt und durch Berührung bewirkte Sensorsignale an einen Prozessor überträgt, der aus den Sensorsignalen auf der Bedienoberfläche Berührpositionen bestimmt und in Abhängigkeit der Berührpositionen eine haptische Rückmeldungen bestimmt, die über piezoelektrische Aktoren oder elektrostatische Aufladung über die Bedienoberfläche an einen Nutzer übermittelt werden. Der Sensor zur Erkennung der Benutzeraktion ist wie aus dem Stand der Technik bereits bekannt als resistiver oder kapazitiver Sensor ausgeführt.

Die US 2013/215079 A1 offenbart ein eine berührempfindliche Bedienfläche umfassendes Betätigungselement zum Bereitstellen einer haptischen Rückmeldung. Die Bedienfläche ist eingerichtet zur Bestimmung einer Berührposition oder einer Bewegung eines Fingers mittels von Touchpads oder Touchdisplays bekannten Verfahren und Technologien. In Abhängigkeit der mindestens einen Berührposition oder der mehrere Berührpositionen umfassenden Bewegung wird durch Veränderung der Reibung zwischen Finger und Bedienfläche eine haptische Rückmeldung an einen Nutzer ausgegeben. Auf diese Weise kann beispielsweise ein Hineinzoomen in ein Bild oder Herauszoomen aus einem Bild von einem entsprechenden realistischen Empfinden begleitet werden. Wenn ein Benutzer ein solches Hinein- oder Herauszoomen durch eine koordinierte Bewegung von zwei oder mehr Fingern auslöst, entspricht die durch Reibung auf die Finger übertragene haptische Empfindung den Kräften, die bei einer Dehnung oder Komprimierung eines realen Objekts auftreten. Die Aktuatoren umfassen bevorzugt ein elektroaktives Material, in dem Reibungsänderungen durch ein elektrisches Feld induziert werden.

Die Aufgabe der hier vorliegenden Erfindung ist eine solche Einstellbarkeit der Reibung zwischen dem Finger und der Anzeigeoberfläche zur Optimierung des haptischen Feedbacks bei der Manipulation von angezeigten Objekten zu nutzen.

Erfindungsgemäß wird diese Aufgabe durch ein Verfahren mit den Merkmalen im Anspruch 1 gelöst. Vorteilhafte Ausgestaltungen und Weiterbildungen des Verfahrens ergeben sich aus den hiervon abhängigen Unteransprüchen. Im Anspruch 7 ist außerdem eine Vorrichtung mit einer Anzeige- und Bedienoberfläche angegeben, welches zur Durchführung eines solchen Verfahrens eingerichtet ist und insbesondere in einem Fahrzeug angeordnet sein kann.

Das erfindungsgemäße Verfahren zum Erzeugen einer haptischen Rückmeldung auf einer durch Fingerbewegungen bedienbaren Anzeigefläche sieht vor, dass, vergleichbar wie es im eingangs genannten Stand der Technik beschrieben ist, ein Reibungskoeffizient zwischen dem Finger und der Anzeigefläche moduliert wird, indem beispielsweise über wenigstens einen Aktuator Oberflächenschwingungen der Anzeigefläche erzeugt werden. Erfindungsgemäß ist, dass die Aufsetzpositionen von zwei Fingern ermittelt und in Abhängigkeit einer Abstandsänderung der gleichzeitig die Oberfläche berührenden Fingern von der Aufsetzposition die Reibung zwischen einem jeden der Finger und der Anzeigefläche verändert werden. Dabei ist vorgesehen, dass der die Änderung bestimmende Gradient des Reibungsanstieges oder -abfalls, im Folgenden als Reibungsgradient bezeichnet, zwischen einem Finger und der Oberfläche und einem weiteren Finger und der Oberfläche gleich aber auch unterschiedlich sein kann. Unter der Aufsetzposition ist die Position zu verstehen, die von den Fingern einer Geste vorangehend, beispielsweise einer Zoom- Greif- oder Wischgeste, auf der Anzeigefläche berührt wird und die Finger dann ohne von der Anzeigefläche Abzusetzen die entsprechende Geste durchführen.

Die Reibungsänderung wird mittels Veränderung von elektrostatischer Aufladung und/oder von durch wenigstens einen Aktuator auf die Anzeigefläche aufgebrachte Oberflächenschwingungen bewirkt. Insbesondere eine Kombination beider Systeme ermöglicht in vorteilhafter Weise eine Reibungsmodulation in einem großen Bereich.

Erfindungsgemäß werden Abstandsänderungen der gleichzeitig die Oberfläche berührenden Fingern in Bezug auf die Aufsetzpositionen durch eine diametral entgegengesetzte Bewegung zur Ergreifung von einem Objekt bewirkt, wobei der Reibungsgradient zwischen Anzeigefläche und dem zu einem Referenzpunkt des Objekts, beispielsweise ein Flächenschwerpunkt oder ein geometrischer Mittelpunkt, näher aufgesetzten Finger größer als der Reibungsgradient zwischen der Anzeigefläche und dem anderen Finger eingestellt wird. Ein auf der Anzeigefläche angezeigtes Objekt wird ergriffen, indem sich zwei Finger auf das Objekt zubewegen. Sobald das Objekt angrenzend an die zwei Finger positioniert ist, gilt diese Objekt als ergriffen und kann mittels der Finger auf der Anzeigefläche manipuliert, d.h. beispielsweise verschoben werden. Sind die Abstände der Aufsetzpositionen in Bezug zum Referenzpunkt des Objekts unterschiedlich groß, werden die Reibungsgradient derart eingestellt, dass sich der weiter vom geometrischen Mittelpunkt des Objekts aufgesetzte Finger schneller und der näher gelegene Finger langsamer der Objektbegrenzung annähert, so dass das Objekte mit beiden Fingern gleichzeitig berührt wird. Bei einem von der Aufsetzposition ansteigenden Reibungsgradient wird der Reibungsgradient zwischen Anzeigefläche und dem vom Referenzpunkt weiter entfernten Finger damit flacher gewählt als der Reibungsgradient zwischen der Anzeigefläche und dem anderen Finger. Idealerweise wird damit das Objekt in Relation zu den Fingern derart zentriert, dass beide Finger die Objektbegrenzung gleichzeitig berühren und virtuell ergreifen. Im Fall einem von der Aufsetzposition abfallenden Reibungsgradient wird dieser zwischen Anzeigefläche und dem Referenzpunkt), des Objekts näher aufgesetzten Finger kleiner als der Reibungsgradient zwischen der Anzeigefläche und dem anderen Finger eingestellt. In Abwandlung kann den Reibungsverläufen entsprechend vorangehender Beschreibung ein wellen- oder sägezahnförmigen Reibungsverlauf überlagert werden.

Gemäß einer außerordentlich günstigen Ausgestaltung des erfindungsgemäßen Verfahrens wird ein Signal in Form einer signifikanten Reibungsänderung oder in Form von einem Aktor auf die Anzeigefläche erzeugte Schwingung Impuls auf die Bedienoberfläche aufgebracht wird, sobald das Objekt mit beiden Fingern virtuell ergriffen wird. Das Objekt ist virtuell ergriffen, sobald die Berandung des Objekts beidseitig mit den Fingern berührt wird, dieser Zustand wird dem Nutzer durch ein zusätzliches haptisches Signal signalisiert. Mit dem haptischen Signal erhält der Nutzer die Information, dass das zwischen seinen beiden Fingern befindliche Objekt manipuliert werden kann. Das haptische Signal wird durch eine signifikante Reibungsänderung, d.h. beispielsweise eine sprunghafte Reibungserhöhung und/oder einen Schwingungsimpuls eines Aktors erzeugt. In einer vorteilhaften Ausführungsform steigt die Reibung mit Abstandsänderung der Finger von den Aufsetzpositionen zumindest abschnittsweise an. Damit wird ein erstes haptisches Feedback erreicht, da nun auch ohne die optische Rückmeldung der Objektmanipulation durch die sich ändernde Reibung rein haptisch auf die Veränderung bzw. die aktuelle Objektgröße rückgeschlossen werden kann. Die Reibung zwischen den Fingern und der Displayoberfläche nimmt bevorzugt in der Aufsetzposition der Finger den kleinsten Wert im Gesamtverlauf an. Mit Veränderung des Abstandes zu der Aufsetzposition, d.h. mit Abstandvergrößerung oder Abstandsverringerung relativ zur Aufsetzposition nimmt die Reibung entsprechend einem vorgegebenen Reibungsgradienten zu. Dadurch, dass die Aufsetzpositionen gewissermaßen eine Reibungssenke darstellen, wird dem Nutzer eine einfache Orientierung zum Auffinden der Aufsetzposition der Finger gegeben.

In einer alternativen Ausführungsform fällt die Reibung mit Abstandsänderung der Finger von den Aufsetzpositionen ab, so dass der Finger im Gesamtverlauf in der Aufsetzposition den größten Wert annimmt. Die Aufsetzposition der Finger ist damit haptisch wiederauffindbar, da dieser den Bereich der höchsten Reibung, d.h. die Spitze des Reibungsberges darstellt.

In einer vorteilhafter Ausführungsform des Verfahrens wird bereits mit Detektion der Annäherung der Finger an die bedienbare Anzeigefläche durch Veränderung von Amplitude und/oder Frequenz der Oberflächenschwingung oder einer elektrostatischen Aufladung der Reibungswiderstand zwischen Finger und Anzeigefläche auf einen Startreibungswert eingestellt. Die Anzeigefläche ist damit in vorteilhafter Weise durch Voreinstellung reibungsbestimmender Parameter bereits vorbereitet, so dass mit Berührung der Anzeigefläche mit den Fingern unmittelbar der gewünschte Reibungswiderstand verzögerungsfrei zwischen Finger und Anzeigefläche zur Verfügung steht.

In einer bevorzugten Ausführungsform wird bei einem Erreichen einer vorgegebenen Abstandsänderung eines jeden der Finger von der Aufsetzposition der Reibungsgradient einem dem bis zur Abstandsänderung wirksamen, entgegengesetzten Reibungsgradient eingestellt, d.h. einem Gradienten mit entgegengesetzter Steigung. Demgemäß weist ein positiver Reibungsgradient eine positive, ein negativer Reibungsgradient eine negative Steigung auf. Mit Erreichen der vorgegebenen Abstandsänderung wird der Reibungsgradient bei einem bis zur vorgegebenen Abstandsänderung positiven Reibungsgradienten negativ oder bei einem bis zur vorgegebenen Abstandsänderung negativen Reibungsgradienten positiv. Der Nutzer erhält eine signifikante Rückmeldung mit dem Überstreichen der vorgegebenen Abstandsänderung. Entsprechend einem mechanischen Schalter, bei dessen Betätigung zuerst die Kraft ansteigt, um danach wieder in eine Rastposition abzufallen, werden mit an- und absteigendem Reibungsgradienten derartige Rastpositionen nachgebildet.

In einer bevorzugten Weiterbildung wird ab einem Überschreiten einer vorgegebenen weiteren zweiten Abstandsänderung der Reibungsverlauf bis zur zweiten Abstandsänderung wiederholt. Bevorzugt ist die erste gleich der zweiten Abstandsänderung, so dass mehrmalige Wiederholungen beispielsweise zu einem gleichförmigen beispielsweise wellen- oder sägezahnförmigen Reibungsverlauf führen, der dem Nutzer in vorteilhafter Weise aufeinanderfolgende Stufen oder Rastungen des Zoomvorganges vermittelt.

In Ausgestaltung des Verfahrens wird mit jeder Wiederholung die Steigung der an- und/oder abfallenden Reibungsgradienten erhöht oder verringert, d.h. die Gradienten werden steiler oder flacher. Zusätzlich oder alternativ wird der Maximalwert des wiederholten Abschnitts des Reibungsverlaufs verändert. Neben sich durch den Reibungsverlauf wiederholender Rastungen, wird durch die Erhöhung der Reibungsgradienten und/oder des Maximalwertes insgesamt das Reibungsniveau angehoben, wodurch dem Nutzer neben den Rastungen ein Maß für die aktuelle Zoomstufe haptisch vermittelt wird. Gleichermaßen kann durch eine Verringerung d.h. Verflachung der Gradienten und/oder Verringerung des Maximalwerts bei sich wiederholenden Rastungen das Reibungsniveau insgesamt erniedrigt werden.

In einem Ausführungsbeispiel, das nicht Teil der beanspruchten Erfindung ist, werden Abstandsänderungen der gleichzeitig die Oberfläche berührenden Fingern in Bezug auf die Aufsetzpositionen durch eine Rotation der Finger um einen Drehpunkt auf der Anzeigefläche bewirkt. Mittels der Anordnung lässt sich beispielsweise eine haptische Rückmeldung bei der Bedienung eines auf der Anzeigevorrichtung dargestellten Drehreglers oder bei der Drehung einer Navigationskarte erzeugen. Mit Entfernung der Finger von den Aufsetzpositionen durch Rotation um einen Drehpunkt auf der Anzeigevorrichtung steigt der Reibungswiderstand an, so dass in den Aufsetzpositionen eine durch eine Reibungssenke oder ein Reibungsmaximum beschriebene Nulllage haptisch wahrnehmbar ist.

In einem Ausführungsbeispiel, das nicht Teil der beanspruchten Erfindung ist, wird durch die gegenseitige Abstandsänderung der Finger ein Zoom von Objekten bewirkt. Entsprechend der Abstandsänderung in Bezug auf die Aufsetzpositionen wird ein Objekt auf der Anzeigefläche größer oder kleiner gezoomt. Ausgehend von der Aufsetzposition steigt bevorzugt die Reibung zwischen Finger und Anzeigefläche, je nach Anwendungsfall kann diese auch fallen. Der Nutzer empfindet während des Zoomvorganges eine Reibungsänderung, womit er selbst ohne Blickkontakt über die Wirksamkeit seiner Betätigung eine haptische Rückmeldung erhält.

Die erfindungsgemäße Vorrichtung umfasst eine bedienbare Anzeigefläche eingerichtet zur Durchführung des vorhergehend beschriebenen Verfahrens.

Weitere vorteilhafte Ausgestaltungen des erfindungsgemäßen Verfahrens sowie einer Vorrichtung bzw. eines Geräts zu seiner Umsetzung, welches vorzugsweise in einem Fahrzeug angeordnet sein kann, finden sich auch in den Ausführungsbeispielen, welche nachfolgend unter Bezugnahme auf die Figuren näher dargestellt sind. Beschriebene und/oder bildlich dargestellte Merkmale können für sich oder in beliebiger, sinnvoller Kombination den Gegenstand der Erfindung bilden, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

Dabei zeigen:
- Fig. 1: eine schematische Darstellung eines Geräts mit einer bedienbaren Anzeigefläche zur Durchführung des Verfahrens und
- Fig. 2 bis Fig. 13: Ausführungsformen des erfindungsgemäßen Verfahrens.

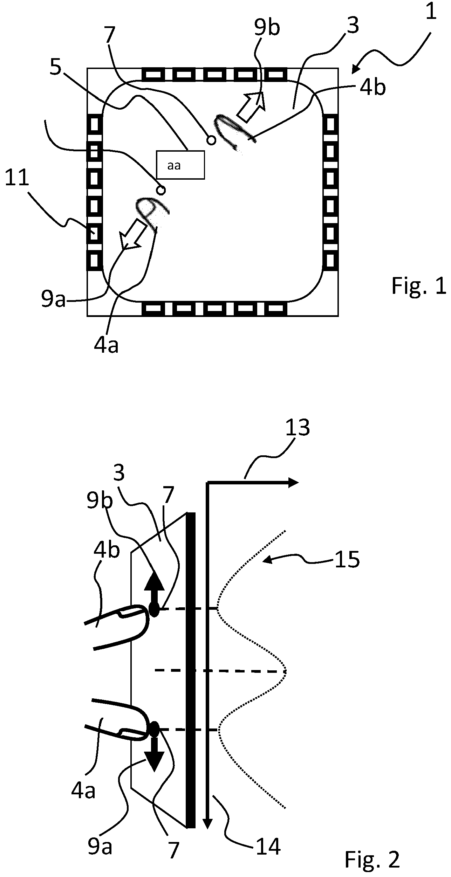

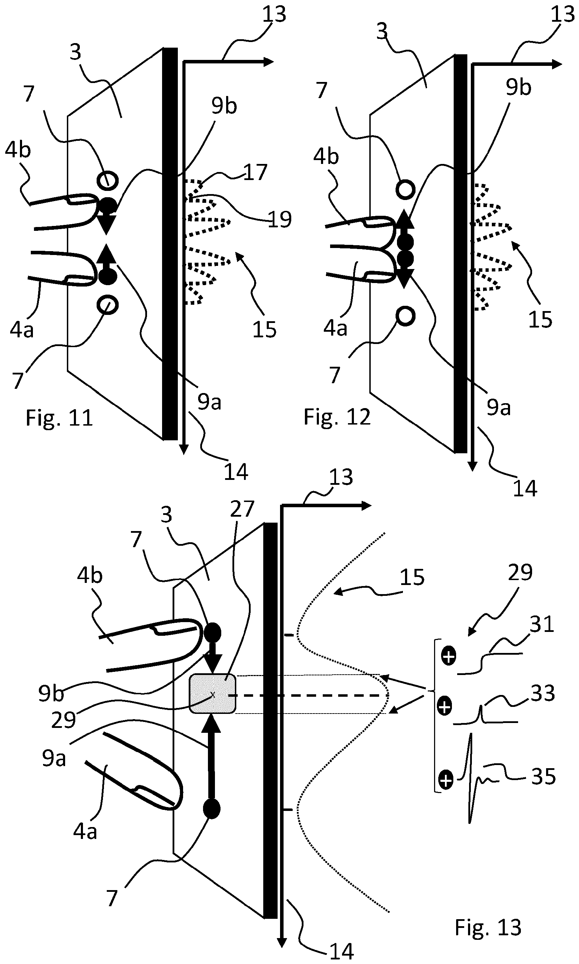

Fig.1 und 13 offenbaren die beanspruchte Erfindung. Die anderen Figuren zeigen Ausführungsbeispiele, die nicht in den Anwendungsbereich der beanspruchten Erfindung fallen, aber zum Verständnis der Offenbarung nützlich sind.

In der Darstellung der Fig. 1 ist schematisiert ein Gerät 1 mit einer bedienbaren Anzeigefläche 3 dargestellt. Eine hier nicht dargestellte Person berührt die Anzeigefläche 3 mit zwei Fingern 4a, 4b, im allgemeinen Daumen und Zeigefinger, in einer Aufsetzposition 7, um dann durch eine gleichzeitige Wischbewegung der beiden Finger 4a, 4b ein Objekt 5 zu manipulieren, d.h. beispielsweise in Pfeilrichtung 9a, 9b aufzuzoomen.

Die Anzeigefläche 3 ist nun mit verschiedenen Aktuatoren 11 versehen, von welchen einige seitlich um die Anzeigefläche 3 angeordnet sind. Diese Aktuatoren 11 können sich, so wie angedeutet, seitlich oberhalb, unterhalb, links und rechts der Anzeigefläche 3 befinden. Sie können auch streifenartig ausgestaltet sein und sich seitlich der Anzeigefläche 3 oder auch unterhalb der Anzeigefläche 3 befinden. Auch eine matrixartige Anordnung oder eine lediglich ein- oder zweiseitige Anordnung der Aktuatoren 11 im Bereich der Anzeigefläche 3 wäre denkbar. Die Aktuatoren 11 sind geeignet, um Schwingungen auf der Oberfläche der Anzeigefläche 3 zu erzeugen. Es kann sich beispielsweise um Piezoaktuatoren aber auch um elektrostatische und/oder kapazitive Elektroden bzw. Aktuatoren handeln. Bezogen auf die zwischen Fingern 4a, 4b und Anzeigefläche 3 ohne Einfluss der Aktuatoren 11 wirkende Basisreibung wird beispielsweise durch Erhöhung von Amplitude und/oder Frequenz der durch Piezoaktoren erzeugten Ultraschallschwingung die Reibung verringert. In einer anderen Ausführungsform sind Aktoren zu Veränderung der elektrostatischen Aufladung der Anzeigefläche vorgesehen, die Reibung würde dann durch zunehmende elektrostatische Aufladung erhöht werden.

Über die Aktuatoren 11 wird die Anzeigefläche 3 nun beispielsweise in der Art in Schwingungen versetzt, so dass sich der Reibungskoeffizient zwischen der Anzeigefläche 3 und den bedienenden Finger 4a, 4b verändern lässt. Die Reibung zwischen den Fingern und der Anzeigefläche 3 wird also in Abhängigkeit einer Position der Finger 4a, 4b entsprechend variiert.

Die Fig. 2 zeigt eine erste Variante, bei der die Finger 4a, 4b in einer Aufsetzposition 7 dargestellt sind. Auf der Ordinate 13 des Achsenkreuzes ist die Höhe der Reibung, auf der Abszisse 14 der von den Fingern 4a, 4b zurückgelegte Weg in Pfeilrichtung 9a, 9b auf der Anzeigefläche 3 abgetragen.

Der Weg-Reibungsverlauf wird durch den Graphen 15 dargestellt. Die Reibung zwischen Anzeigefläche 3 und den Fingern 4a, 4b ist in den Aufsetzpositionen 7 auf ein Minimum eingestellt, ausgehend von den Aufsetzpositionen 7 steigt die Reibung in durch die Pfeile 9a, 9b dargestellte Bewegungsrichtungen mit einem positiven Gradienten an. Ein Reibungsmaximum stellt sich ein, sobald sich die Finger 9a, 9b berühren, d.h. keinen Abstand zueinander aufweisen, oder auf der Anzeigefläche 3 einen maximal möglichen Abstand zueinander aufweisen. Der Nutzer erhält damit sowohl bei einem Groß- und Kleinzoomen eines Objektes eine haptische Rückmeldung über den Zoomgrad, gleichfalls kann er die Aufsetzpositionen 7, d.h. die Ausgangsposition durch den Reibungsverlauf 15 bewirkte haptische Rückmeldung leicht wiederfinden.

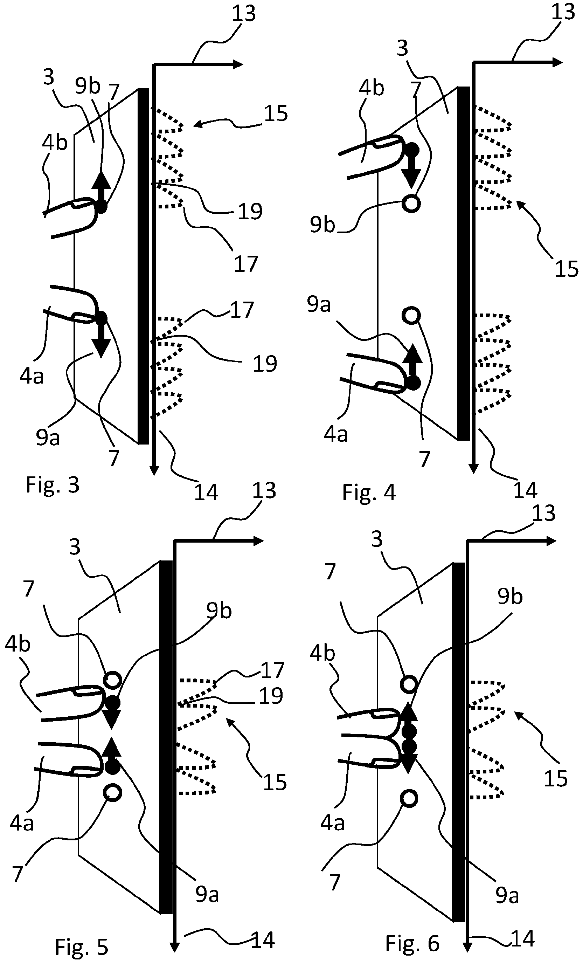

Die Fig. 3 zeigt eine Variante, bei der ausgehend von den Aufsetzpositionen 7 nach einem Anstieg der Reibung nach einer vorgegebenen Abstandsänderung 17 die Reibung wieder abnimmt, d.h. bis zur Abstandsänderung 17 ist der Reibungsgradient positiv, danach negativ. Die Gradienten sind dabei so gewählt, dass in Bewegungsrichtung der positive Gradient steiler als der negative Gradient ist. Ab einem weiteren vorgegebenen Abstand 19 wird der bisherige Reibungsverlauf 15 wiederholt bzw. mehrmals wiederholt. Damit wird ein sägezahnähnlicher Reibungsverlauf 15 realisiert, der dem Nutzer beispielsweise beim Ausziehen eines Fensters oder beim Zoomen eines Objekts wie einer Landkarte eine haptische Rückmeldung von sich wiederholenden Rastungen vermittelt. In einer Abwandlung kann der positive und negative Gradient einen gleich großen Steigungsbetrag aufweisen.

In Fig. 4 ist im Unterschied zur Fig. 3 der Zustand eines mit den Fingern 4a, 4b gegenüber den Aufsetzpositionen beispielsweise bereits aufgezoomtes Fenster dargestellt. Die Finger 4a, 4b bewegen sich gegenüber der Fig. 3 in eine entgegengesetzte Pfeilrichtung 9a, 9b. Dadurch, dass in dieser Bewegungsrichtung der Gradient des Reibungsanstiegs kleiner als der Reibungsabfall ist, ist der der Reibungswiderstand in Richtung Aufsetzpositionen 7 kleiner als beim Aufzoomen gemäß Fig 3. Durch die unterschiedlichen Gradienten ist das Auffinden der Position der Ausgangspunkte 7 begünstigt.

In Fig. 5 ist der Zustand eines gegenüber den Aufsetzpositionen mit den Fingern 4a, 4b beispielsweise kleingezoomte Fenster dargestellt. Die in Pfeilrichtung 9a, 9b bewegten Finger 4a, 4b entfernen sich von den Aufsetzpositionen 7. Der Reibungsverlauf 15 ist wieder derart gestaltet, dass auf ein Aufsetzenden folgend die Reibung mit einem ersten Gradienten ansteigt und mit einem gegenüber dem ersten, flacheren Gradienten wieder abfällt. Analog Fig. 3 wird der Reibungsan- und abstieg zyklisch wiederholt, so dass am Finger eines Nutzer Rastungen wahrnehmbar sind.

Gegenüber der in Fig. 5 werden die Finger 4a, 4b in der Fig. 6 in die entgegengesetzte Bewegungsrichtung 9a, 9b auf der Anzeigefläche 3 bewegt, d.h. ein Fenster wird beispielsweise nach erfolgtem Kleinzoomen wieder größer gezoomt. Da nunmehr in Bewegungsrichtung 9a, 9b der ansteigende Reibungsgradient flacher als der abfallende Reibungsgradient ist, lassen sich die Finger unschwer in Richtung der Aufsetzpositionen 7 bewegen. In den Aufsetzpositionen 7 wird bei Weiterbewegung der Finger 4a, 4b in einen Reibungsverlauf 15 gemäß Fig. 3 gewechselt, so dass in Bewegungsrichtung der ansteigende steiler als der abfallende Reibungsgradient ist.

Durch den Steigungswechsel in den Aufsetzpositionen 7 ist diese haptisch markiert und durch den Nutzer leicht auffindbar.

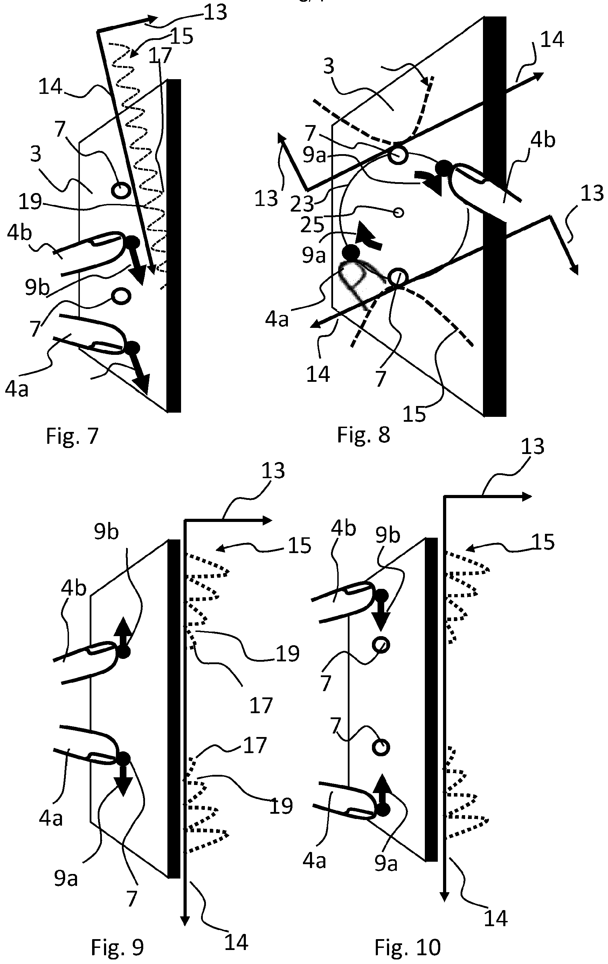

In Fig. 7 ist eine Bewegung der Finger 4a, 4b auf der Anzeigefläche 3 gezeigt, wobei sich die Abstände der Finger zueinander nicht verändern. Mit einer derartigen Bewegung kann beispielsweise ein Objekt oder ein Bildschirmausschnitt verschoben oder gescrollt werden. Ausgehend von den Aufsetzpositionen 7 werden die Finger 4a, 4b parallel in Richtung der Pfeile 9a, 9b bewegt. Der Reibungsverlauf 15 wird derartig eingestellt, dass sich positive und negative Reibungsgradienten beispielsweise analog Fig. 3 abwechseln, so dass der Nutzer den haptischen Eindruck aufeinanderfolgender Raststufen empfindet.

Fig. 8 zeigt eine Rotation eines Symbols oder virtuellen Schalters umfassenden Anwendungsfall. Die Bewegung der Finger 4a, 4b in Pfeilrichtung 9a, 9b tangential zu dem Schaltelement 23 bewegt, das um den Mittelpunkt 25 gedreht wird. Auf der Abszisse 14 ist der Drehwinkel, auf der Ordinate 13 des Koordinatensystems der Reibungskoeffizient abgetragen. Der Reibungsverlauf 15 bewirkt, dass mit Drehung des virtuellen Schaltelements 23 ausgehend von den Aufsetzpositionen 7 die Reibung ansteigt und dem Nutzer eine haptische Rückmeldung entsprechend einem mechanischen, federbelasteten Drehschalter liefert. In zu den Pfeilrichtungen 9a, 9b entgegengesetzter Drehrichtung steigt ausgehend von den Aufsetzpositionen 7 die Reibung gleichfalls an, so dass eine Nulllage des Schaltelements 23 in der Reibungssenke definiert ist.

Die Figuren 9 und 10 zeigen eine Modifikation der in den Figuren 3 und 4 gezeigten Ausführungsform.

Gegenüber Fig. 3 wird in Fig. 9 das Niveau der Reibungsmaxima zwischen Finger 4a, 4b und der Anzeigefläche 3 mit jeder Wiederholung erhöht. Der Reibungsverlauf 15 wird ab dem vorgegebenen Abstand 19 wiederholt, wobei gleichzeitig das Niveau des Reibungsmaximums im nachfolgenden Abschnitt des Reibungsverlaufs 15 erhöht wird. Bei weiteren Wiederholungen wird das Reibungsmaximum kontinuierlich bis zu einem physikalisch möglichen Höchstwert erhöht.

Gleichzeitig kann als zusätzliche Ergänzung mit jeder Wiederholung die Steigung des an- und absteigenden Gradienten erhöht werden. Um jeweils die nächste Raststufe zu erreichen, steigt die am Finger eines Nutzers zu überwindende Maximalkraft an.

Entsprechend Fig. 4 zeigt Fig. 10 zwei von den Aufsetzpositionen 7 wegbewegte Finger 4a, 4b, die sich in Pfeilrichtung 9a, 9b wieder auf die Aufsetzpositionen 7 zubewegen. Die Reibungsmaxima werden bei jeder Wiederholung eines Abschnitts des Reibungsverlaufs 15 zur Erleichterung der Auffindung der Aufsetzpositionen wieder reduziert.

Die Figuren 11 und 12 zeigen eine Modifikation der in den Figuren 5 und 6 gezeigten Ausführungsform.

Fig. 11 zeigt den Zustand eines mit den Fingern 4a, 4b gegenüber den Aufsetzpositionen 7 beispielsweise kleingezoomte Fenster. Die in Pfeilrichtung 9a, 9b bewegten Finger 4a, 4b entfernen sich weiter von den Aufsetzpositionen 7. Der Reibungsverlauf 15 ist wieder derart gestaltet, dass mit der auf ein Aufsetzen folgend die Reibung mit einem ersten Gradienten ansteigt und mit einem gegenüber dem ersten, flacheren Gradienten wieder abfällt. Analog Fig. 3 wird der Reibungsan- und abstieg zyklisch wiederholt, wobei bei jeder Wiederholung der Reibungsmaximalwert erhöht wird. Als zusätzliche Ergänzung kann mit jeder Wiederholung die Steigung des an- und/oder absteigenden Gradienten erhöht werden.

Die Fig. 12 zeigt gegenüber der Fig.11 analog zur Fig. 6 eine Rückbewegung der Finger 4a, 4b in Richtung der Aufsetzpositionen 7. Gleichermaßen werden die an- und absteigende Gradienten umfassende Abschnitte des Reibungsverlaufs 15 wiederholt, wobei die Reibungsmaximalwerte dieser Abschnitte kontinuierlich reduziert werden. Als ergänzende Maßnahme werden die an- und absteigende Gradienten umfassende Abschnitte des Reibungsverlaufs 15 mit Annäherung an die Aufsetzposition 7 verflacht.

Fig. 13 beschreibt die beanspruchte Erfindung, wobei eine virtuellen Ergreifung bzw. Erfassung eines Objekts 27 auf der Anzeigefläche 3 mittels der Finger 4a, 4b dargestellt wird. Die Finger 4a, 4b werden an den Aufsetzposition 7 aufgesetzt und nachfolgend in Pfeilrichtung 9a, 9b in Richtung des Objekts 27 auf der Anzeigefläche 3 zubewegt. Der Finger 4a ist dabei weiter vom Schwerpunkt 29 des Objekts 27 als der Finger 4b entfernt. Ausgehend von den Aufsetzposition 7 steigt die Reibung mit vorgegebenen Gradienten in Pfeilrichtung 9a, 9b und entsprechend Fig. 1 auch in die Gegenrichtung an. Die Gradienten der Reibungsverläufe 15 zwischen den Fingern 4a, 4b und der Anzeigefläche 3 wird derart gestaltet, dass sich der Finger 4b langsamer und der Finger 4a schneller auf den Schwerpunkt 29 zubewegt. Hierzu wird entsprechend dem Abstand vom Schwerpunkt 29 der Reibungsgradient, d.h. der Anstieg der Reibung zwischen dem Finger 4a und der Anzeigefläche 3 ist kleiner als der Anstieg der Reibung zwischen Finger 4b und der Anzeigefläche 3. Mit anderen Worten bestimmt der Abstand der Finger 4a, 4b zum Schwerpunkt 29 den Reibungsgradienten. Hierdurch wird eine automatische Zentrierung des Objekts 27 zu den Fingern 4a, 4b erreicht, so dass die Finger weitgehend zeitgleich die Berandung des Objekts 27 berühren. Dieser Objektkontakt wird dem Nutzer durch Überlagerung eines Signals 29 in Form einer signifikanten Reibungsänderung oder in Form einer mittels einem Aktor erzeugten Schwingung signalisiert. Das überlagerte Signal 29 kann beispielsweise als Stufensprung 31, als Impuls 33 oder als gedämpfte Schwingung 35 ausgeführt werden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehenden Erläuterungen in der Beschreibung, definiert wird.

## Patentansprüche

1. Verfahren zum Erzeugen einer haptischen Rückmeldung auf einem Touchdisplay, wobei Positionen eines Fingers auf der Anzeigefläche (3) sensiert und in Abhängigkeit der Positionen ein Reibungskoeffizient zwischen dem Finger und der Anzeigefläche (3) moduliert wird, wobei eine Modulation des Reibungskoeffizients mittels Veränderung von elektrostatischer Aufladung und/oder von durch wenigstens einen Aktuator auf die Anzeigefläche aufgebrachte Oberflächenschwingungen bewirkt wird wobei Aufsetzpositionen (7) von zwei gleichzeitig die Anzeigefläche (3) berührenden Fingern (4a, 4b) ermittelt und in Abhängigkeit einer mit Ausführung einer Geste sich verändernden Fingerpositionen bewirkten Abstandsänderung zu den Aufsetzpositionen (7) die Reibung zwischen einem jeden der Finger (4a, 4b) und der Anzeigefläche (3) verändert wird, **dadurch gekennzeichnet, dass** bei Abstandsänderungen der gleichzeitig die Oberfläche berührenden Finger (4a, 4b) in Bezug auf die Aufsetzpositionen (7) einer diametral entgegengesetzten Bewegung zur *virtuellen* Ergreifung von einem auf der Anzeigefläche angezeigten Objekt (27) der Reibungsgradient zwischen Anzeigefläche (3) und einem vom Referenzpunkt (29) des auf der Anzeigefläche angezeigten Objekts (27) näher aufgesetzten Finger größer als der Reibungsgradient zwischen der Anzeigefläche und dem anderen Finger eingestellt wird, so dass sich der zum Referenzpunkt näher gelegene Finger langsamer dem auf der Anzeigefläche angezeigten Objekt (27) nähert als der andere.

2. Verfahren nach Anspruch 1,
**dadurch gekennzeichnet, dass**
ein Signal (29) in Form einer signifikanten Reibungsänderung und/oder in Form einer von einem Aktor erzeugten Schwingung auf die Bedienoberfläche (3) aufgebracht wird, sobald das Objekt (27) mit beiden Fingern (4a, 4b) virtuell ergriffen wird.

3. Verfahren nach einem der Ansprüche 1 oder 2,
**dadurch gekennzeichnet, dass**
bereits mit Detektion der Annäherung der Finger (4a, 4b) an die Anzeigefläche (3) die Reibung zwischen einem jeden der Finger (4a, 4b) und der Anzeigefläche (3) bestimmende Parameter auf einen Startwert eingestellt werden.

4. Verfahren nach einem der Ansprüche 1 bis 3,
**dadurch gekennzeichnet, dass**
bei einem Erreichen einer vorgegebenen Abstandsänderung (17) eines jeden der Finger (4a, 4b) von den Aufsetzpositionen (7) der Reibungsgradient auf eine der bis zur Abstandsänderung (17) wirksamen, entgegengesetzte Steigung eingestellt wird.

5. Verfahren nach einem der Ansprüche 1 bis 4,
**dadurch gekennzeichnet, dass**
ab einem Überschreiten einer vorgegebenen weiteren zweiten Abstandsänderung (19) der Reibungsverlauf (15) bis zur zweiten Abstandsänderung (19) wiederholt wird.

6. Verfahren nach Anspruch 5,
**dadurch gekennzeichnet, dass**
mit jeder Wiederholung die Steigung der ansteigenden und/oder abfallenden Reibungsgradienten und/oder mit jeder Wiederholung der Maximalwert des wiederholten Abschnitts des Reibungsverlaufs (15) verändert wird.

7. Vorrichtung für ein Fahrzeug umfassend ein Touchdisplay zur Ausführung des Verfahrens nach einem der Ansprüche 1 bis 6.

## Claims

1. Method for generating a haptic feedback on a touch display, wherein positions of a finger on the display surface (3) are sensed and a coefficient of friction between the finger and the display surface (3) is modulated in dependence on the positions,
wherein modulation of the coefficient of friction is effected by means of variation of electrostatic charge and/or of surface vibrations applied to the display surface by at least one actuator, wherein
contact positions (7) of two fingers (4a, 4b) simultaneously contacting the display surface (3) are determined and the friction between each of the fingers (4a, 4b) and the display surface (3) is changed as a function of a change in distance from the contact positions (7) caused by the execution of a gesture,
**characterized in that**
in the case of changes in distance of the fingers (4a, 4b) touching the surface simultaneously with respect to the contact positions (7) of a diametrically opposite movement to the *virtual* grasping of an object (27) displayed on the display surface, the friction gradient between the display surface (3) and a finger placed closer from the reference point (29) of the object (27) displayed on the display surface is set to be greater than the friction gradient between the display surface and the other finger, so that the finger closer to the reference point approaches the object (27) displayed on the display surface more slowly than the other finger.

2. Method according to claim 1,
**characterized in that**
a signal (29) in the form of a significant friction change and/or in the form of a vibration generated by an actuator is applied to the operating surface (3) as soon as the object (27) is virtually grasped with both fingers (4a, 4b).

3. Method according to either claim 1 or claim 2,
**characterized in that**
parameters determining the friction between each of the fingers (4a, 4b) and the display surface (3) are already set to a starting value upon detection of the approach of the fingers (4a, 4b) to the display surface (3).

4. Method according to any of claims 1 to 3,
**characterized in that**
when a predetermined change in distance (17) of each of the fingers (4a, 4b) from the contact positions (7) is reached, the friction gradient is set to a gradient opposite to the gradient effective until the change in distance (17).

5. Method according to any of claims 1 to 4,
**characterized in that**
once a predetermined further second change in distance (19) is exceeded, the friction process (15) is repeated until the second change in distance (19) is reached.

6. Method according to claim 5,
**characterized in that**
with each repetition the slope of the rising and/or falling friction gradients and/or with each repetition the maximum value of the repeated portion of the friction gradient (15) is changed.

7. Device for a vehicle comprising a touch display for carrying out the method according to any of claims 1 to 6.

## Revendications

1. Procédé permettant de produire un retour haptique sur un écran tactile, dans lequel des positions d'un doigt sur la surface d'affichage (3) sont détectées et un coefficient de frottement entre le doigt et la surface d'affichage (3) est modulé en fonction des positions,
dans lequel une modulation du coefficient de frottement est provoquée par la modification de la charge électrostatique et/ou de vibrations de surface appliquées sur la surface d'affichage par au moins un actionneur, dans lequel
des positions de pose (7) de deux doigts (4a, 4b) touchant simultanément la surface d'affichage (3) sont déterminées et le frottement entre chacun des doigts (4a, 4b) et la surface d'affichage (3) est modifié en fonction d'une modification de la distance par rapport aux positions de pose (7), laquelle modification est provoquée par des positions de doigts modifiées avec l'exécution d'un geste, **caractérisé en ce que**
en cas de modifications de la distance des doigts (4a, 4b) touchant simultanément la surface par rapport aux positions de pose (7) d'un mouvement diamétralement opposé pour la saisie virtuelle d'un objet (27) affiché sur la surface d'affichage, le gradient de frottement entre la surface d'affichage (3) et un doigt posé plus près du point de référence (29) de l'objet (27) affiché sur la surface d'affichage est réglé de manière à être plus grand que le gradient de frottement entre la surface d'affichage et l'autre doigt, de sorte que le doigt situé plus près du point de référence s'approche plus lentement de l'objet (27) affiché sur la surface d'affichage que l'autre doigt.

2. Procédé selon la revendication 1,
**caractérisé en ce que**
un signal (29) sous la forme d'une modification du frottement significative et/ou sous la forme d'une vibration générée par un actionneur est appliqué sur la surface de manipulation (3) dès que l'objet (27) est saisi virtuellement avec les deux doigts (4a, 4b).

3. Procédé selon l'une des revendications 1 ou 2,
**caractérisé en ce que**
dès la détection de l'approche des doigts (4a, 4b) sur la surface d'affichage (3), des paramètres déterminant le frottement entre chacun des doigts (4a, 4b) et la surface d'affichage (3) sont réglés sur une valeur initiale.

4. Procédé selon l'une des revendications 1 à 3,
**caractérisé en ce que**
lorsqu'une modification de la distance (17) prédéfinie de chacun des doigts (4a, 4b) est atteinte depuis les positions de pose (7), le gradient de frottement est réglé sur l'une des pentes qui est opposée et agit jusqu'à la modification de la distance (17).

5. Procédé selon l'une des revendications 1 à 4,
**caractérisé en ce que**
à partir d'un dépassement d'une autre seconde modification de la distance (19) prédéfinie, la courbe de frottement (15) est répétée jusqu'à la seconde modification de la distance (19).

6. Procédé selon la revendication 5,
**caractérisé en ce que**
à chaque répétition, la pente des gradients de frottement ascendants et/ou descendants est modifiée et/ou, à chaque répétition, la valeur maximale de la section répétée de la courbe de frottement (15) est modifiée.

7. Dispositif destiné à un véhicule comprenant un écran tactile pour l'exécution du procédé selon l'une des revendications 1 à 6.
